# EUROPEAN PATENT APPLICATION

(11) **EP 4 621 563 A1**
(43) Date of publication of application: **24.09.2025**
(21) Application number: 25157703.7
(22) Date of filing: 13.02.2025
(51) Int. Cl.: G06F 8/656, G06F 8/71

(54) **DEVICE, SYSTEM AND METHOD TO DEFER A COMMIT OF A MICROCODE VERSION IDENTIFIER**

(30) Priority: 22.03.2024 US 202418614507
(71) Applicant: INTEL Corporation, Santa Clara, CA 95054 (US)
(72) Inventor: Shafi, Hisham, San Jose CA, 95124 (US); Chandrasekaran, Avinash, Mountain View, 94043 (US); Wiedemeier, Jeff, Austin TX, 78737 (US); Ashok, Chinmay, Beaverton OR, 97006 (US); Cape, Scott, Portland OR, 97209 (US); Raj, Ashok, Portland OR, 97209 (US)
(74) Representative: Samson & Partner Patentanwälte mbB

(57) **Abstract**

Techniques and mechanisms for deferring a commit of a version identifier to facilitate a rollback of a microcode update. In an embodiment, a first microcode update corresponds to a first version identifier. A processor provides functionality to perform a load of the first microcode update, wherein said load does not comprise, or otherwise per se require, a committing of the first version identifier at the processor. Any such committing is performed, conditionally, based on one or more subsequent operations which include, or are concurrent with, testing of the first microcode update to determine whether the commit, or a rollback, is to be performed. In another embodiment, the processor supports visibility or other access, by a software process, to one or more parameters associated with a deferred version commit functionality.

## Description

### BACKGROUND

### 1. Technical Field

This disclosure generally relates to microcode updates and more particularly, but not exclusively, to committing a version identifier which determines an availability of a microcode rollback.

### 2. Background Art

Processors typically include microcode to facilitate the performance of operations by a central processing unit (CPU), a graphical processing unit (GPU), one or more intellectual property (IP) blocks, a system on a chip (SoC) and/or the like. Microcode can usually be loaded at any of various times, including early processor reset or firmware interface table (FIT) microcode updates, early and late basic input/output (I/O) system (BIOS) microcode updates, and early and runtime operating system (OS) microcode updates.

Microcode (uCode) updates, also commonly referred to a uCode patches, are used to deliver critical fixes for devices in the field, such as processors implemented in data centers, various cloud environments and/or the like. Typically, a microcode update (MCU) is loaded by the platform firmware during the boot process (e.g., BIOS) and/or during the boot phase of the operating system. However, due to evolving usage models, it has become increasingly common to need to load microcode updates while the system is fully operational, such as when end user workloads, virtual machines, and/or other such processes are running.

Sometimes the microcode updates are invalid or deficient and must be rolled back to a previous version. Microcode rollback is a configuration process which transitions a device, such as a processor, from having a relatively new microcode version loaded to having a relatively old microcode version loaded. Typically, a rollback reverts a system, often without a reboot, to an earlier state wherein an older microcode update was loaded at a processor. As successive generations of processor use cases continue to increase in number, variety, and capability, there is expected to be an increasing premium placed on improvements to the provisioning of microcode updates.

### BRIEF DESCRIPTION OF THE DRAWINGS

The various embodiments of the present invention are illustrated by way of example, and not by way of limitation, in the figures of the accompanying drawings and in which:
FIG. 1 shows a block diagram illustrating features of a system to provide a deferred version commit functionality according to an embodiment.
FIG. 2 shows a flow diagram illustrating features of a method to perform a deferred commit of a version identifier according to an embodiment.
FIG. 3 shows a block diagram illustrating features of a processor to defer a commit of a version identifier according to an embodiment.
FIGs. 4A-4D show format diagrams each illustrating features of a respective register to facilitate a deferred version commit functionality according to a corresponding embodiment.
FIG. 5 shows a flow diagram illustrating features of a method to select between various version commit modes according to an embodiment.
FIG. 6 shows a flow diagram illustrating features of a method to selectively perform either one of a version commit or a microcode rollback according to an embodiment.
FIG. 7 shows a flow diagram illustrating features of a method to selectively allow or prevent the setting of a version identifier as a candidate to be subsequently committed according to an embodiment.
FIG. 8A shows a format diagram illustrating features of a register to facilitate a microcode rollback according to an embodiment.
FIG. 8B shows a format diagram illustrating features of metadata 850 to identify a microcode version to which a processor can be rolled back according to an embodiment.
FIG. 9 illustrates an exemplary system.
FIG. 10 illustrates a block diagram of an example processor that may have more than one core and an integrated memory controller.
FIG. 11A is a block diagram illustrating both an exemplary in-order pipeline and an exemplary register renaming, out-of-order issue/execution pipeline according to examples.
FIG. 11B is a block diagram illustrating both an exemplary example of an in-order architecture core and an exemplary register renaming, out-of-order issue/execution architecture core to be included in a processor according to examples.
FIG. 12 illustrates examples of execution unit(s) circuitry.
FIG. 13 is a block diagram of a register architecture according to some examples.

### DETAILED DESCRIPTION

Embodiments discussed herein variously provide techniques and mechanisms for deferring a commit of a version identifier for microcode. In various embodiments, a given release of microcode is one in a sequence of microcode updates - e.g., wherein a given microcode release is to serve as an update to (e.g., as a substitute for) an earlier microcode release. Accordingly, "new microcode," "newer microcode," "more recent microcode" and related terms variously refer herein to microcode which is relatively more recent in a sequence of microcode updates. By contrast, "old microcode," "older microcode," "less recent microcode" and related terms variously refer herein to microcode which is relatively less recent in such a sequence of microcode updates. The term "microcode version" (or, for brevity, simply "version") refers herein to a place that a given microcode release has in a sequence of microcode updates.

An identifier of a given microcode version (also referred to as a "version identifier," a "version id," or "IDv" herein) typically includes a number which is one in a sequence of successively larger numbers which each correspond to a different respective microcode update. Accordingly, "new version identifier," "newer version identifier," "high version number," "higher version number" and related terms variously refer to a version identifier which corresponds to newer microcode. By contrast, "old version identifier," "older version identifier," "low version number," "lower version number" and related terms variously refer to a version identifier which corresponds to older microcode.

As used herein in the context of a microcode update (and/or in the context of a version identifier which corresponds to such a microcode update), the term "commit" refers to the setting of a configuration state which determines an earliest possible microcode release to which a processor - or at least some core and/or other suitable resource of said processor - can be rolled back. In various embodiments, a commit operation comprises setting an operational parameter to be equal to (or otherwise indicative of) a given version identifier. As a result of such a commit operation, the core and/or other processor resources in question are unable to be rolled back to any microcode update which is earlier than that which corresponds to the given version identifier. For example, the performance of a subsequent rollback (if any) would be conditioned upon an evaluation of the operational parameter to determine whether the rollback would violate a constraint imposed by the currently committed version identifier.

Certain embodiments variously provide independence between a loading of a microcode update and the committing of a version identifier (a "version commit" herein) which corresponds to that microcode update. For example, in some embodiments, the loading of a microcode update at a processor does not, in and of itself, include the committing of a corresponding version identifier at that processor. Nor does such the loading of a microcode update at a processor, in and of itself, determine that a corresponding version identifier has been (or will be) committed at a processor.

Accordingly, some embodiments variously enable a functionality - referred to herein as a deferred version commit functionality, or a "deferred commit" functionality - whereby the committing of a version identifier is subject to being deferred at least until after one or more events which take place after the loading of a corresponding microcode update. By way of illustration and not limitation, various embodiments include or otherwise facilitate an evaluation of a microcode update after a loading thereof, wherein the subsequent committing of a corresponding version identifier is conditioned upon whether (or not), according to some one or more criteria, the evaluation provides a positive assessment of the microcode update.

Some embodiments variously enable one or more features of a deferred commit functionality to be visible with, configurable by, and/or otherwise accessible to one or more executing software processes. For example, various embodiments enable software to detect that processor circuitry supports a deferred commit functionality - e.g., wherein such software is further able to selective enable, disable or otherwise configure one or more features of said functionality. Certain embodiments additionally or alternatively enable a microcode update loading and testing - and, for example, a (conditional) deferred version commit - to be performed without the need for the processor in question to be put through a shutdown/restart sequence.

By contrast, in existing techniques, when a microcode update is issued, two identical microcode releases are provided, where one such release (the "rollback friendly" release) corresponds to a relatively low version number, and the other such release (the "anti-rollback" release) corresponds to a relatively high version number. In these existing techniques, a loading of the rollback friendly release includes, or is otherwise automatically performed in combination with, a (redundant) committing of the relatively low version number, which is the same as that for an older microcode release. If the loaded rollback friendly release subsequently fails a testing and evaluation process, then the processor is able to be rolled back by reloading an older microcode release. However, if the rollback friendly release instead passes the testing and evaluation process, then the processor would perform a commit of the relatively high version number. In facilitating use of a deferred commit functionality, some embodiment variously eliminate or otherwise mitigate the burden on design/validation teams to create and evaluate two versions of the same microcode update.

The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including processor-capable circuitry that supports a deferred commit functionality.

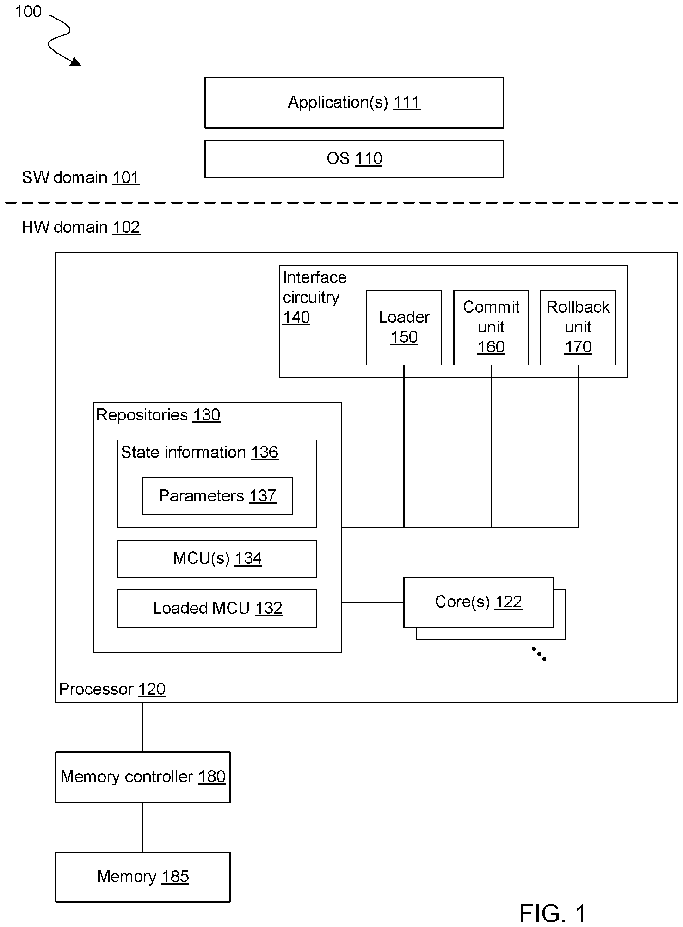

FIG. 1 shows a system 100 which provides a deferred version commit functionality according to an embodiment. System 100 illustrates features of one example embodiment wherein a processor is operable to load a microcode release which corresponds to one version identifier, wherein the microcode release is available to be executed, with a core of the processor, while another version identifier (which corresponds to a different microcode release) is committed for that core. In some embodiments, the processor enables software to have visibility to, and/or configurability of, one or more features of a deferred commit functionality.

As shown in FIG. 1, system 100 comprises a hardware (HW) domain 102 including circuitry that, for example, supports operation as a component of a desktop computer, laptop computer, handheld device (e.g., a smart phone, palmtop device, tablet, etc.), gaming console, wireless communication device, or other such computing-capable device. In the example embodiment shown, hardware domain 102 comprises a processor 120 - e.g., a central processing unit, a graphical processor or the like - and (in some embodiments) a memory 185 which is coupled to be accessed by processor 120 via a memory controller 180. For example, processor 120 comprises at least one core (represented by the one or more cores 122 shown) which is operable to execute one or more processes which are illustrated as being in a software (SW) domain 101. State of one or more processes executed with core(s) 122 is maintained in memory 185 - e.g., wherein processor 120 further comprises one or more cache resources (not shown) to make available a cached version of some or all such state.

In an embodiment, one or more processes of software domain 101 are provided by an execution of instructions with a given core of processor 120 - e.g., wherein software domain 101 comprises the illustrative operating system (OS) 110 shown. In some embodiments, OS 110 is a Windows-based operating system, a Unix or Linux based operating system, a MacOS, or any other operating system suitable to support deferred commit functionality as described herein. In one such embodiment, OS 110 is of a type (such as iOS, Android, Windows Mobile, etc.) that is designed for operation on a handheld device.

In various embodiments, one or more applications 111 execute on top of OS 110 - e.g., wherein OS 110 and/or a given application of the one or more applications 111 is privileged to read, configure or otherwise access microcode update information, deferred commit parameters, or the like. Alternatively or in addition, OS 110 and/or a given application of the one or more applications 111 provides functionality to load, execute, evaluate, and/or approve of a given microcode update. In some embodiments, the one or more applications 111 includes a hypervisor, one or more virtual machines and/or the like.

In various embodiments, processor 120 includes, or is to be provided with, microcode that is to be executed during operation of system 100. For example, a given processor core of core(s) 122 includes, is coupled to access, or otherwise operates based on, microcode which facilitates an execution of instructions by said processor core. In one such embodiment, one or more resources of a processor core - e.g., including an instruction decoder, an execution engine, and/or the like - variously include or otherwise operate based on the execution of respective microcode. However, some embodiments are not limited with respect to a particular processor resource which executes or otherwise uses a given microcode release, and/or are not limited with respect to a particular functionality which is provided with the execution of said microcode release.

In an embodiment, one or more resources of processor 120 support a "deferred version commit" functionality whereby the loading of a microcode update (which facilitates operation of a processor core) does not include, and does not in and of itself require, that a corresponding version identifier be committed at processor 120. Such one or more resources are provided, for example, with one or more repositories (such as the illustrative repositories 130 shown) which are to store at least some state of processor 120, and/or to store one or more microcode updates. Alternatively or in addition, such one or more resources are provided with some or all of interface circuitry 140, by which an executing software process, and/or dedicated security hardware (e.g., circuitry which is isolated from access by one or more software processes) is able to read, write or otherwise access state such as that which is provided at repositories 130. Although repositories 130 and interface circuitry 140 are shown as being external to one or more cores 122, in other embodiments, some or all of repositories 130 and interface circuitry 140 are variously integrated into one or more of core(s) 122.

In the example embodiment shown, repositories 130 store state information 136 which includes parameters 137 that each specify or otherwise indicate a respective characteristic of deferred version commit functionality. By way of illustration and not limitation, parameters 137 comprise a capability state parameter which specifies a presence (or, for example, an absence of), of a deferred commit functionality at processor 120. Alternatively or in addition, parameters 137 comprise an enablement state parameter which is configurable - e.g., reconfigurable - to specify whether a deferred commit functionality is currently enabled or disabled for at least one core (and/or other suitable resource) of processor 120. Alternatively or in addition, parameters 137 comprise a pendency state parameter which is (re)configurable to indicate whether or not any version identifier - e.g., corresponding to some loaded microcode update - is currently pending as a candidate to be committed. Alternatively or in addition, parameters 137 comprise a parameter which is (re)configurable to specify a version identifier as being currently committed. Alternatively or in addition, parameters 137 comprise a parameter which is (re)configurable to specify a version identifier as being a pending candidate for possible commitment. In various embodiments, state information 136 includes any of various additional or alternative parameters which are suitable to facilitate deferred version commit functionality.

In various embodiments, repositories 130 are additionally or alternatively suitable to store a microcode update (MCU) 132 which is currently loaded at processor 120 - e.g., wherein the loaded MCU 132 is available for execution at one of the core(s) 122. Although some embodiments are not limited in this regard, repositories 130 additionally or alternatively store to one or more other MCUs 134 which, for example, were previously loaded each at a respective core of processor 120 - e.g., wherein processor 120 (or at least a given core of processor 120) is subject to being rolled back from loaded MCU 132 to one of the MCU(s) 134.

In various embodiments, interface circuitry 140 includes circuit logic - represented by the illustrative loader 150 shown - which is operable to load a microcode update to one of repositories 130 (e.g., to a memory resource of one of core(s) 122). Alternatively or in addition, interface circuitry 140 includes circuit logic (represented by the illustrative commit unit 160 shown) to commit a version identifier to a mode register or or other suitable resource of processor 120. Alternatively or in addition, interface circuitry 140 includes circuit logic (represented by the illustrative rollback unit 170 shown) to rollback a core and/or other suitable resource of processor 120 from loaded MCU 132 to an older one of the MCU(s) 134.

By way of illustration and not limitation, an instruction set architecture (ISA) of processor 120 comprises some or all of interface circuitry 140 - e.g., wherein loader 150 includes circuitry to facilitate execution of an instruction to load MCU 132 to a core or other suitable resource of processor 120. In one such embodiment, commit unit 160 includes circuitry to facilitate execution of an instruction to perform (e.g., conditionally) a deferred commit a version identifier which corresponds to the previously-loaded MCU 132. Alternatively or in addition, rollback unit 170 includes circuitry to facilitate execution of an instruction to perform (e.g., conditionally) a rollback which loads one of the older MCU(s) 134 as a substitute for the more recently loaded MCU 132.

In an illustrative scenario according to one embodiment, some or all of state information 136 is provided at one or more registers of processor 120 - e.g., including one or more model-specific registers (MSRs) that, for example, are adapted from a register set of any of various conventional x86 processor architectures. In one such embodiment, interface circuitry 140 comprises circuitry which facilitates execution of any of various suitable instructions to read, write to, or otherwise access some or all such MSRs. By way of illustration and not limitation, a given one of loader 150, commit unit 160 or rollback unit 170 facilitates execution of an RDMSR instruction to read a MSR, an WRMSR instruction to write to a MSR, and/or a CPUID instruction to read some or all of the current state information 136. Alternatively or in addition, a given one of loader 150, commit unit 160 or rollback unit 170 facilitates execution of a respective special purpose instruction which (for example) comprises an opcode that specifies that some microcode load, some version identifier commit, or some microcode rollback is to be performed. In other embodiments, a mailbox command is utilized to make some or all of state information 136 available to OS 110 and/or other suitable software.

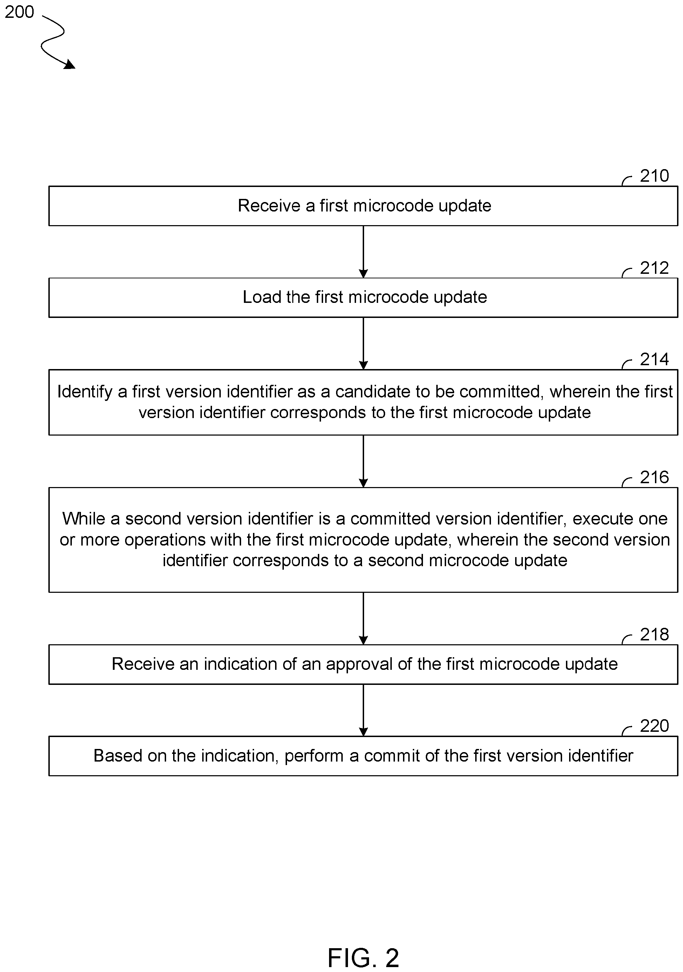

FIG. 2 shows a method 200 for performing a deferred commit of a version identifier according to an embodiment. Method 200 illustrates one example of an embodiment wherein a commit of an identifier for a microcode version is deferred until after a loading of the microcode and, for example, after one or more operations which are performed subsequent to (and for example, based on) said loading. In an embodiment, such a deferred version commit is performed based on one or more conditions which are not strictly required as part of - as otherwise as a result of - the loading of the microcode. For example, the deferred version commit is conditionally performed, in some embodiments, based on a result of a subsequent test of the microcode (where said result is one of multiple possible results). Operations such as those of method 200 are performed with any of various combinations of suitable hardware (e.g., circuitry), firmware and/or executing software which, for example, includes and/or operates with processor 120.

As shown in FIG. 2, method 200 comprises (at 210) receiving a first microcode update which (for example) is to be evaluated as a possible substitute for some or all microcode which is currently loaded at a processor. In one such embodiment, the receiving at 210 comprises privileged software - e.g., OS 110, one of the application(s) 111, or the like - being provided access to a first microcode update from a developer, manufacturer, or other such resource or agent. For example, the privileged software is to authenticate or otherwise process the first microcode update prior to a provisioning of the first microcode update to the processor. Alternatively or in addition, the receiving at 210 comprises the first microcode update being communicated - e.g., with privileged software, with isolated security hardware, or the like - to a processor (e.g., processor 120) which supports a deferred commit functionality.

Method 200 further comprises (at 212) loading the first microcode update to a memory resource of a core or other suitable circuitry of the processor. In one example embodiment, the loading at 212 comprises privileged software sending to interface circuitry 140 one or more signals (e.g., one or more executable instructions) which specify that the first microcode update is to be stored, or otherwise (re)configured, to function as the loaded MCU 132. Alternatively or in addition, the loading at 212 comprises loader 150 (and/or any of various other suitable circuit resources of processor 120) performing such storing and/or other (re)configuring of the first microcode update to function as the loaded MCU 132.

In some embodiments, the loading at 212 comprises operations which are adapted from conventional microcode update techniques. By way of illustration and not limitation, in one such embodiment, the processor is compatible with an x86 architecture, wherein the loading at 212 includes, or is performed based on, or otherwise in association with, an execution of a write instruction (such as a WRMSR 79H) which is indicative of a microcode load being performed, or needing to being performed.

Method 200 further comprises (at 214) identifying a first version identifier as a candidate to be committed, wherein the first version identifier corresponds to the first microcode update. In one example embodiment, the identifying at 214 comprises privileged software sending to interface circuitry 140 one or more signals which specify that the first version identifier is to be registered - e.g., as one of the parameters 137 of state information 136 - as identifying a microcode update which is currently pending as a candidate to be committed. Alternatively or in addition, the identifying at 214 comprises interface circuitry 140, repositories 130 and/or any of various other suitable circuit resources of processor 120 performing such a registering of the first version identifier.

Method 200 further comprises (at 216) executing one or more operations at a core the processor with the loaded first microcode update, wherein said executing takes place while a second version identifier - which corresponds to a second microcode update - is committed at the processor. For example, the loading at 212 substitutes the second microcode update with the first microcode update for use by said core of the processor - e.g., wherein, after such loading, the second version identifier remains the committed version identifier at least until some deferred commit (if any) of the first version identifier.

For example, the executing at 216 comprises executing one or more instructions of test software which is to provide a basis for (and, for example, which is to perform) an evaluation of the first microcode update. In other embodiments, method 200 omits the executing at 216 - e.g., wherein one or more other methods instead execute, and perform an evaluation of, one or more instances of the first microcode update (e.g., including an instance which is loaded at, and executed with, another processor or another core of the same processor).

Method 200 further comprises (at 218) receiving an indication of an approval of the first microcode update - e.g., wherein the indication is generated based on the one or more operations executed at 216. In an example embodiment, the receiving at 218 comprises processor 120 receiving via interface circuitry 140 one or more signals (for example, from test software) which specify that the first microcode update has been determined to satisfy one or more test criteria, and is thus approved for a version commit. In another embodiment, the receiving at 218 comprises test software receiving - e.g., from a processor core which executes the first microcode update - a value or values which specify or otherwise indicate one or more performance metrics. In one such embodiment, the one or more performance metrics are evaluated by the test software to determine whether (or not) the first microcode update satisfies one or more test criteria. Evaluation of the first microcode update includes one or more operations which, for example, are adapted from conventional microcode testing techniques (which are not detailed herein to avoid obscuring features of various embodiments). Some embodiments are not limited with respect to the particular performance metric(s) and/or the particular test criteria which might be a basis for evaluating a given microcode update.

Based on the approval which is indicated at 218, method 200 (at 220) performs a commit of the first version identifier - e.g., wherein the committing ends the pendency of the first version identifier as a candidate version identifier. In another scenario according to a different embodiment, the indication received at 218 instead represents a rejection of the first microcode update - e.g., wherein, instead of the commit performed at 220, method 200 performs a microcode rollback based on the indication.

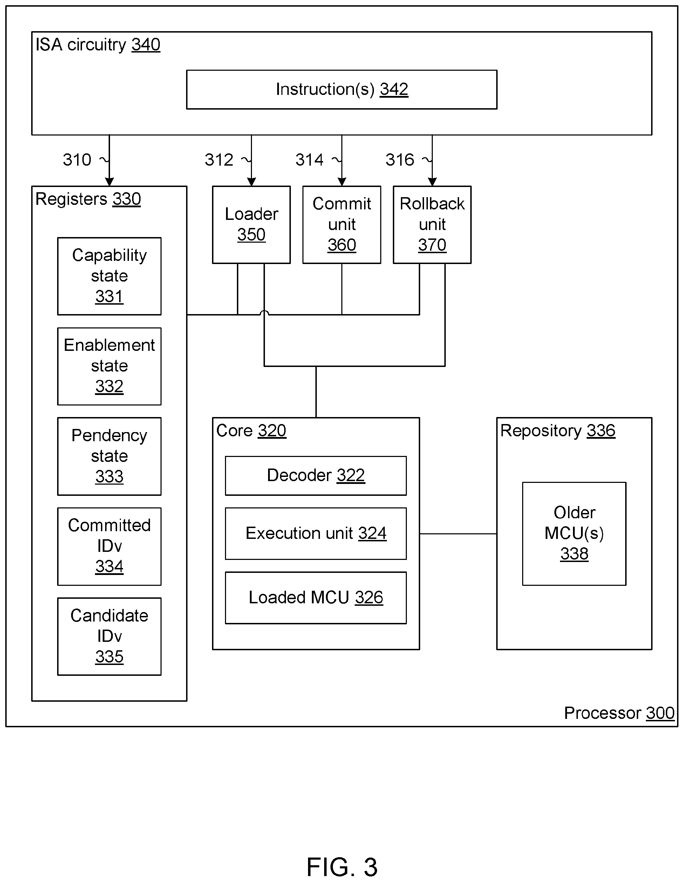

FIG. 3 shows a processor 300 which defers a commit of a version identifier according to an embodiment. Processor 300 illustrates features of one example embodiment which comprises registers (e.g., model specific registers) to provide state information which identifies features of a deferred version commit functionality. Execution of instructions variously enable software to have read, write and/or other access to some or all such state information. In some embodiments, processor 300 provides functionality such as that of processor 120 - e.g., wherein operations of method 200 are performed with some or all of processor 300.

As shown in FIG. 3, processor 300 comprises one or more processor cores (e.g., including the illustrative core 320 shown), a loader 350, a commit unit 360, and a rollback unit 370 which, for example, correspond functionally to core(s) 122, loader 150, commit unit 160, and rollback unit 170 (respectively). Core 320 includes a decoder 322 to decode instructions in preparation for such decoded instructions to be variously executed with an execution unit 324 of core 320. At a given time during operation of processor 300, core 320 includes, is coupled to access, or otherwise operates based on microcode (such as the illustrative loaded MCU 326 shown) which, for example, is executed to provide or otherwise facilitate functionality of decoder 322, execution unit 324 and/or the like.

In the example embodiment shown, registers 330 (e.g., MSRs) of core 320 store state information comprising parameters - e.g., parameters 137 - that variously specify or otherwise indicate respective characteristics of deferred version commit functionality. By way of illustration and not limitation, registers 330 provide comprise a capability state 331 which specifies a presence (or, for example, an absence), of a support for deferred commit functionality at processor 120. Alternatively or in addition, registers 330 provide an enablement state 332 which is (re)configurable to specify whether a deferred commit functionality is currently enabled or disabled for at least one core and/or other suitable resource(s) of processor 120. Alternatively or in addition, registers 330 provide a pendency state 333 which is (re)configurable to indicate whether or not any version identifier - e.g., corresponding to some loaded microcode update - is currently pending as a candidate to be committed. Alternatively or in addition, registers 330 provide a committed IDv 334 parameter which is (re)configurable to specify a version identifier as being currently committed. Alternatively or in addition, parameters 137 comprise a candidate IDv 334 parameter which is (re)configurable to specify a version identifier as being a pending candidate for possible commitment.

In various embodiments, core 320 further includes a read/write capable memory resource to serve as a repository of a MCU 326 which is currently loaded for execution with decoder 322, execution unit 324 and/or other suitable circuitry of core 320. In one such embodiment, core 320 is coupled to access (or alternatively, includes) another read/write capable repository 336 which is available to store one or more other MCUs 338 - e.g., wherein a given one of MCU(s) 338 was replaced by the loaded MCU 326, but where core 320 is able to be rolled back from the loaded MCU 326 to that one of the MCU(s) 338.

In various embodiments, processor 300 (and more particularly core 320, in some embodiments) further comprises instruction set architecture circuitry ISA 340 which, for example, provides functionality such as that of interface circuitry 140. ISA 340 supports the execution, by core 320, of one or more instructions 342 to variously read, write or otherwise access one or more parameters at registers 330 and/or to perform a microcode update load, a microcode rollback, or the like. By way of illustration and not limitation, ISA 340 facilitates operation of (and in some embodiments, includes) a loader 350, a commit unit 360 and a rollback unit 370 which, for example, correspond functionally to loader 350, commit unit 360 and rollback unit 370, respectively.

In some embodiments, execution of one or more of the instruction(s) 342 includes or otherwise results in ISA 340 signaling loader 350 (e.g., with the illustrative signal 312 shown) to load a microcode update - such as MCU 326 - to core 320. Alternatively or in addition, such execution includes or otherwise results in ISA 340 signaling registers 330 (e.g., with the illustrative signal 310 shown) to implement a write access which sets a value of candidate IDv 335 to be equal to a first version identifier which corresponds to the loaded MCU 326. Such a write access identifies a pendency of the first version identifier as a candidate to be committed at some later time.

In some embodiments, execution of one or more of the instruction(s) 342 additionally or alternatively includes or otherwise results in ISA 340 signaling commit unit 360 (e.g., with the illustrative signal 314 shown) to perform a version identifier commit which sets a value of committed IDv 334 to be equal to the first version identifier which corresponds to the loaded MCU 326. Alternatively, such execution includes or otherwise results in ISA 340 signaling rollback unit 370 (e.g., with the illustrative signal 316 shown) to perform a rollback which loads some replacement microcode - such as one of the MCU(s) 338 - as a substitute for MCU 326.

In an illustrative scenario according to one embodiment, commit unit 360 performs a version commit based on core 320 (or another suitable resource of processor 300) receiving, generating or otherwise detecting an indication that the MCU 326 has satisfied some predetermined one or more test criteria. Such a version commit is "deferred" where it takes place after the loading of MCU 326, wherein said loading does not include - and, in and of itself, does not otherwise require - performance of the version commit. By way of illustration and not limitation, an evaluation of MCU 326 is performed after MCU 326 has been loaded at core 320 (or is otherwise loaded for execution with core 320), as well as while candidate IDv 335 is equal to the first version identifier, and while committed IDv 334 is equal to some other version identifier which corresponds to some older microcode update - e.g., one of the other MCU(s) 338 in repository 336. In one such embodiment, the deferred version commit sets committed IDv 334 to be equal to the first version identifier (and, for example, sets the candidate IDv 335 to be equal to some baseline value which indicates that no candidate version identifier is pending).

In another scenario according to an embodiment, rollback unit 370 performs a rollback based on core 320 (or another suitable resource of processor 300) detecting that the MCU 326 fails to satisfy such one or more test criteria. In some embodiments, the rollback includes, results in, or is otherwise associated with (re)setting candidate IDv 335 to be equal to some baseline value which indicates that no candidate version identifier is pending.

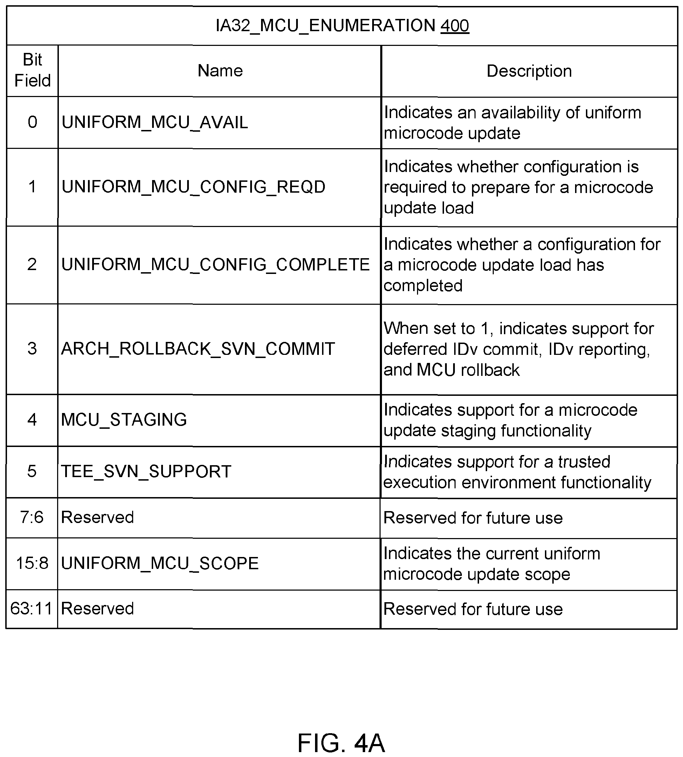

FIGs. 4A-4D show respective registers 400, 420, 440, 460 each to facilitate a deferred version commit functionality according to a corresponding embodiment. Registers 400, 420, 440, 460 variously illustrate repositories of state information at a processor - such as processor 120 or processor 300 - which is to make some or all such state information visible, configurable and/or otherwise accessible to software. For example, the processor enables such software to control or otherwise determine the loading, execution, testing and/or committing of a microcode update. In an embodiment, one or more operations of method 200 include, are based on, and/or result in such access to registers 400, 420, 440, 460.

FIG. 4A shows an example format of a IA32_MCU_ENUMERATION register 400 (e.g., a read-only register) which identifies whether the processor in question is capable to support one or more types of functionalities which are related to microcode updating and, more particularly, to providing a deferred version commit. In the example embodiment shown, register 400 comprises a parameter ARCH_ROLLBACK_SVN_COMMIT, the value of which indicates whether the processor is able to support deferred version commit functionality. In an embodiment, the parameter ARCH_ROLLBACK_SVN_COMMIT provides information which corresponds functionally to capability state 331. For example, the parameter ARCH_ROLLBACK_SVN_COMMIT identifies whether the processor further comprises one or more additional registers and/or other suitable resources which are used configure or otherwise determine processor state which facilitates the conditional (or other) performance of a deferred version commit.

Although some embodiments are not limited in this regard, the value of ARCH_ROLLBACK_SVN_COMMIT further indicates whether the processor is able to support version reporting to software, software control of microcode rollbacks, and/or any of various other such features related to version commits or microcode rollbacks. Additionally or alternatively, register 400 further comprises one or more other parameters which indicate any of various other features including, but not limited to, whether the processor is able to support uniform microcode update functionality, one or more conditions related to such uniform microcode update functionality, whether the processor is able to support microcode update staging, and/or the like.

The particular order, and the respective sizes, of the various fields of register 400 (and similarly, those of registers 420, 440, 460) is merely illustrative, and not limiting on some embodiments. In some embodiments, register 400 further comprises any of various other fields (not shown) to facilitate the communication and/or use of information for the control of microcode updates, commits and/or rollbacks.

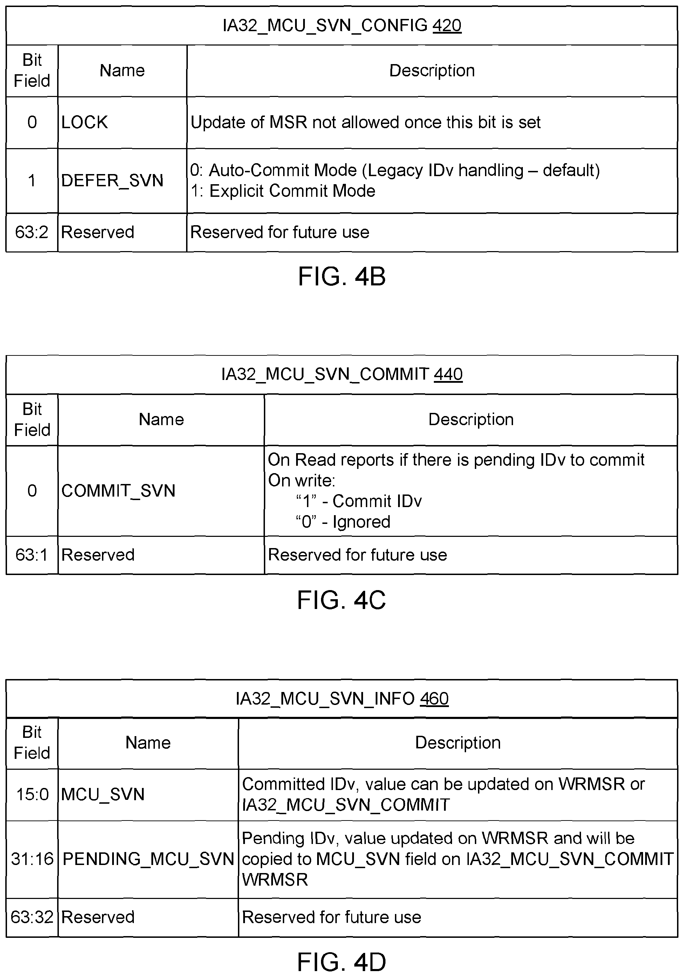

FIG. 4B shows an example format of an IA32_MCU_SVN_CONFIG register 420 (e.g., a read/write capable register) which identifies whether the processor in question is currently enabled to perform a deferred version commit. In the example embodiment shown, register 420 comprises a parameter DEFER_SVN, the value of which specifies whether a deferred version commit functionality is enabled or, alternatively, is disabled. In an embodiment, the parameter DEFER_SVN provides information which corresponds functionally to enablement state 332.

For example, setting the parameter DEFER_SVN to a first value configures the processor (or at least a core and/or other resource of said processor) to an "Auto-Commit" mode whereby one or more version commits are to be performed automatically each as part of, or in combination with, the loading of a corresponding microcode update by the processor. Such an automatic version commit includes one or more features of legacy version identifier commit techniques - e.g., wherein the automatic committing of a version identifier prevents any microcode update from being rolled back after it has been loaded. In some embodiments, the Auto-Commit mode is a default mode of a processor.

In one such embodiment, setting the parameter DEFER_SVN to a second value instead configures one or more processor resources to an "Explicit Commit" mode whereby one or more version commits are each deferred until a respective explicit commit request is additionally communicated after the loading (and, for example, testing) of a corresponding microcode update by the processor. Although some embodiments are not limited in this regard, register 420 further comprises one or more other parameters, such as a LOCK parameter which can be set to a value which prevents the parameter DEFER_SVN from being changed.

FIG. 4C shows an example format of a IA32_MCU_SVN_COMMIT register 440 which identifies a pendency of a candidate version identifier (if any). In the example embodiment shown, register 440 comprises a parameter COMMIT_SVN, the value of which indicates whether a version identifier is a pending candidate to be committed. For example, the parameter COMMIT_SVN provides information which corresponds functionally to pendency state 333.

In some embodiments, the parameter COMMIT_SVN merely identifies that there is some version identifier which is currently a pending candidate for commission. In other embodiments, the parameter COMMIT_SVN identifies more particularly that a currently pending candidate version identifier has been approved for commission. For example, the parameter COMMIT_SVN is set by testing software (and/or any of various other suitable agents) to indicate to the processor that a currently loaded microcode update satisfies one or more test criteria, and that a corresponding candidate version identifier is to be committed.

In an illustrative scenario according to one embodiment, a BIOS, software or other suitable agent configures the parameter DEFER_SVN of the IA32_MCU_SVN_CONFIG register 420, during a configuration phase such as a bootup, to specify either explicit commit mode or an auto-commit mode. For example, such an agent is prevented from changing DEFER_SVN from Explicit commit mode to Auto-commit mode while any core reports, via a respective COMMIT_SVN parameter, that a respective version identifier is pending as a candidate to be committed.

In one such embodiment, during runtime operations, software subsequently loads to the processor a new microcode update which corresponds to a new version identifier. If an Auto-commit mode of the processor is configured, then such loading includes, or is otherwise automatically accompanied with, a committing of the new version identifier, whereby any future rollback from that newer microcode update is prevented. By contrast, an Explicit commit mode of the processor results in a commit (if any) of the new version identifier being deferred at least until some event which is in subsequent to the loading of the new microcode update.

FIG. 4D shows an example format of an IA32_MCU_SVN_INFO register 460 (e.g., a read/write capable register) which identifies one or more version identifiers which each correspond to a respective microcode update. In the example embodiment shown, register 460 comprises a parameter MCU_SVN which is to receive and/or provide an identifier of a version which has been committed. Additionally or alternatively, register 460 comprises a parameter PENDING_MCU_SVN which is to receive and/or provide an identifier of a version identifier which has yet to be committed, but which is pending as a candidate to be committed.

In an embodiment, the loading of a newer microcode update includes, results in, or is otherwise performed in combination with the PENDING_MCU_SVN parameter being set equal to a newer version identifier which corresponds to said newer microcode update. After such loading, the MCU_SVN parameter remains equal to an older version identifier, which corresponds to an older microcode update (e.g., one which is replaced by the loading of the newer microcode update).

In an illustrative scenario according to one embodiment, a committing of the newer microcode version is conditionally performed, if at all, at some later time - e.g., after an execution of one or more (micro)operations with the newer microcode version, and (for example) after an evaluation of the one or more (micro)operations indicates that the newer microcode version satisfies one or more test criteria. In one such embodiment, the committing of the newer version identifier includes setting the MCU_SVN parameter to be equal to the newer version identifier which is identified by the PENDING_MCU_SVN parameter. In some embodiments, the committing of the newer version identifier further includes, results in, or is otherwise performed in combination with a clearing or other (re)setting of the PENDING_MCU_SVN parameter to some baseline value which indicates that there is no pending candidate version identifier.

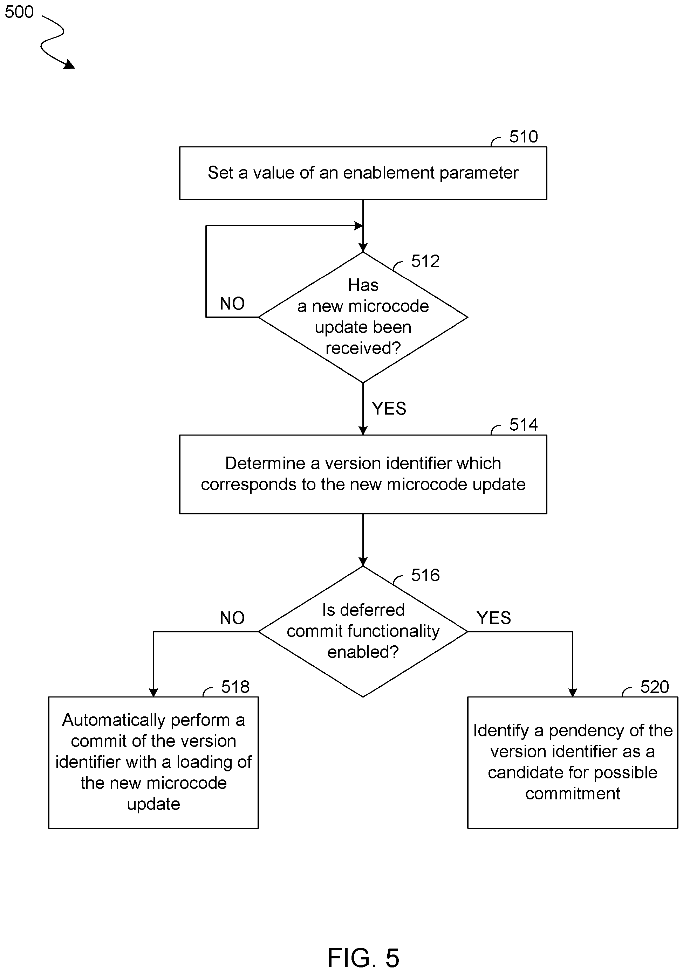

FIG. 5 shows a method 500 for selecting between various version commit modes according to an embodiment. Method 500 illustrates one example of an embodiment which selectively enables or disables a deferred version commit functionality of at least one core of processor. Operations such as those of method 500 are performed with any of various combinations of suitable hardware (e.g., circuitry), firmware and/or executing software which, for example, include or operate with processor 120 or processor 300. In an embodiment, method 500 includes, is based on, or is a basis for, some or all operations of method 200.

As shown in FIG. 5, method 500 comprises (at 510) setting a value of a parameter to specify whether (or not) a deferred commit functionality is enabled. In an embodiment, the setting at 510 comprises, or is otherwise based on, an execution of one or more software instructions - e.g., to write or otherwise provide the enablement state 332 of processor 300. By way of illustration and not limitation, the setting at 510 comprises executing a register write instruction (e.g., a WRMSR instruction) comprising an operand which specifies a value for the parameter DEFER_SVN of the IA32_MCU_SVN_CONFIG register 420. In another embodiment, the setting at 510 comprises, or is based on, execution of a special purpose instruction (e.g., a DEFER SVN ENABLE instruction or a DEFER SVN DISABLE instruction), wherein an opcode of the instruction implicitly identifies a value for an enablement parameter.

After the setting at 510, method 500 performs an evaluation (at 512) to determine whether a new MCU has been received at the processor - e.g., since a most recent committing of a version identifier which corresponds to some older MCU. By way of illustration and not limitation, the evaluating at 512 comprises detecting (and for example, executing) an instruction to load the new MCU to a memory resource of a processor core. Where it is determined at 512 that no such new MCU has been received, method 500 performs a next instance of the evaluating at 512. Where it is instead determined at 512 that a new MCU has been received, method 500 (at 514) determines a new version identifier which corresponds to the new microcode update. By way of illustration and not limitation, the determining at 514 comprises performing a write to the PENDING_MCU_SVN parameter of the IA32_MCU_SVN_INFO register 460.

Method 500 further comprises performing an evaluation (at 516) to determine, based on the value set at 510, whether a deferred commit functionality is currently enabled - e.g., at least for a core and/or other suitable processor resources for which the new MCU has been loaded (or is to be loaded) for execution. Where it is determined at 516 that the deferred commit functionality is currently disabled, method 500 (at 518) automatically performs a commit of the new version identifier as part of, or in combination with, a loading of the new MCU. Where it is instead determined at 516 that the deferred commit functionality is currently enabled, method 500 (at 520) identifies a pendency of the new version identifier as being a candidate for possible commitment (e.g., wherein any such commitment is deferred pending an evaluation of the new MCU).

By way of illustration and not limitation, the identifying at 520 comprises setting the parameter PENDING_MCU_SVN of the IA32_MCU_SVN_INFO register 460 to be equal to the new version identifier.

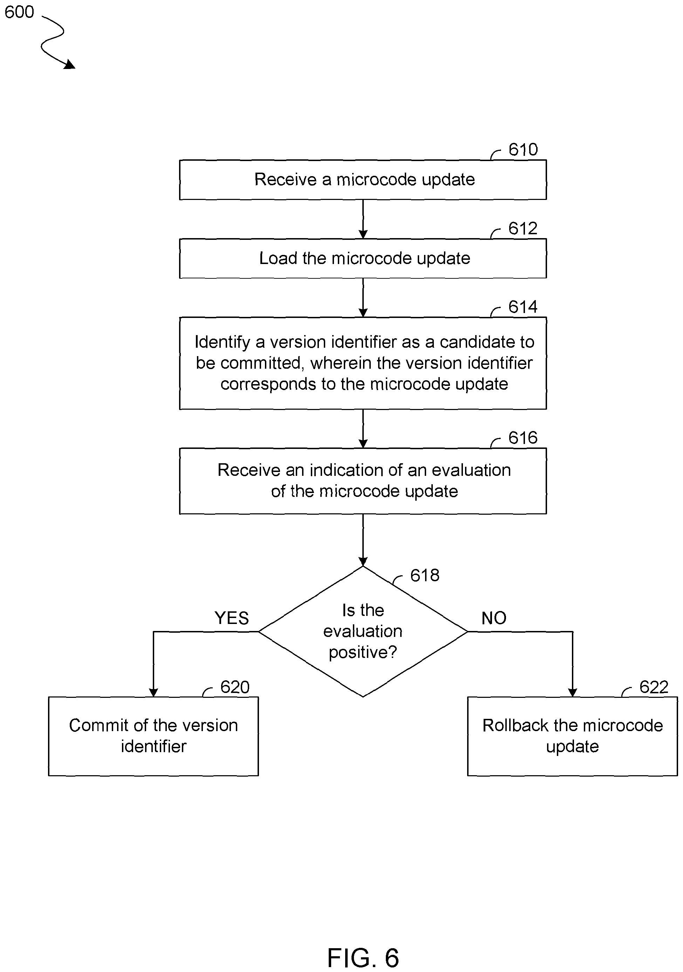

FIG. 6 shows a method 600 for selectively performing either one of a deferred version commit or a microcode rollback according to an embodiment. Method 600 illustrates one example of an embodiment which conditionally performs, or foregoes performing, a deferred commit of a version identifier. Operations such as those of method 600 are performed with any of various combinations of suitable hardware, firmware and/or executing software which, for example, include or operate with processor 120 or processor 300. In an embodiment, method 600 includes, is based on, or is a basis for, operations of one of methods 200, 500.

As shown in FIG. 6, method 600 comprises (at 610) receiving a microcode update at a processor which supports a deferred version commit functionality. In an embodiment, the receiving at 610 includes, or is otherwise based on, any of various conventional techniques for distributing a microcode release (e.g., an update, patch, or the like). Some embodiments are not limited as to any particular resource which generates, relays or otherwise provides the microcode update to the processor. Furthermore, various embodiments are not limited with respect to a particular type of path or paths by which the microcode update is communicated to the processor, with respect to a particular basis on which the microcode update is authenticated for provisioning to (and, for example, loading at) the processor, and/or the like.

Method 600 further comprises (at 612) loading the microcode update to a memory resource such as that of a core, or other suitable processor circuitry circuit, from which the microcode update can be executed at the processor. Method 600 further comprises (at 614) identifying a version identifier, which corresponds to the microcode update, as being a candidate to be committed at some point after the loading 612. In one example embodiment, the identifying at 614 comprises processor 300 setting the version identifier as the candidate IDv 335. In another embodiment, the identifying at 614 comprises writing the version identifier to the parameter PENDING_MCU_SVN of the IA32_MCU_SVN_INFO register 460.

Method 600 further comprises (at 616) receiving an indication of an evaluation of the microcode update. By way of illustration and not limitation, in one such embodiment, method 600 further comprises, or is based on, one or more operations (not shown) being executed by the processor with the loaded microcode update. In an embodiment, a test resource (e.g., comprising test software and/or test hardware) performs the evaluation of such execution - e.g., wherein the test resource measures, calculates, or otherwise detects one or more metrics of processor performance. Based on such one or more metrics, the test resource directly or indirectly indicates to the processor whether the microcode update has satisfied one or more test criteria. Some embodiments are not limited with respect to a particular one or more test criteria on which the evaluation is based. In various embodiments, some or all such testing is adapted from conventional techniques (which are not detailed herein to avoid obscuring features of such embodiments) for evaluating a microcode release.

Method 600 further comprises performing an evaluation (at 618) to detect, based on the indication received at 616, whether the evaluation is positive (e.g., whether the microcode update has been determined to satisfy one or more test criteria). Where it is detected at 618 that the evaluation is positive, method 600 (at 620) performs a deferred commit of the version identifier which corresponds to the microcode update. In one example embodiment, performing the deferred commit at 620 comprises setting the parameter MCU_SVN of the IA32_MCU_SVN_INFO register 460 to be equal to the current value of the parameter PENDING_MCU_SVN of the IA32_MCU_SVN_INFO register 460 (and, for example, subsequently setting the parameter PENDING_MCU_SVN to some baseline value which indicates that there is no pending candidate version identifier). In another example embodiment, performing the deferred commit at 620 comprises setting the version identifier to be the committed IDv 334 (and, for example, setting a value of candidate IDv 335 to indicate that there is no pending candidate version identifier).

Where it is instead detected at 618 that the evaluation is negative, method 600 (at 622) performs a rollback of the the microcode update - e.g., wherein the processor is rolled back from the microcode update which was most recently loaded at 612 to some older microcode release. In one example embodiment, performing the deferred commit at 620 comprises clearing or otherwise setting the parameter PENDING_MCU_SVN of the IA32_MCU_SVN_INFO register 460 to some baseline value which indicates that there is no pending candidate version identifier (e.g., without changing the value of the parameter MCU_SVN of the IA32_MCU_SVN_INFO register 460). In one example embodiment, performing the deferred commit at 620 comprises processor 300 clearing or otherwise setting candidate IDv 335 to some baseline value which indicates that there is no pending candidate version identifier (e.g., without changing the value of the committed IDv 334).

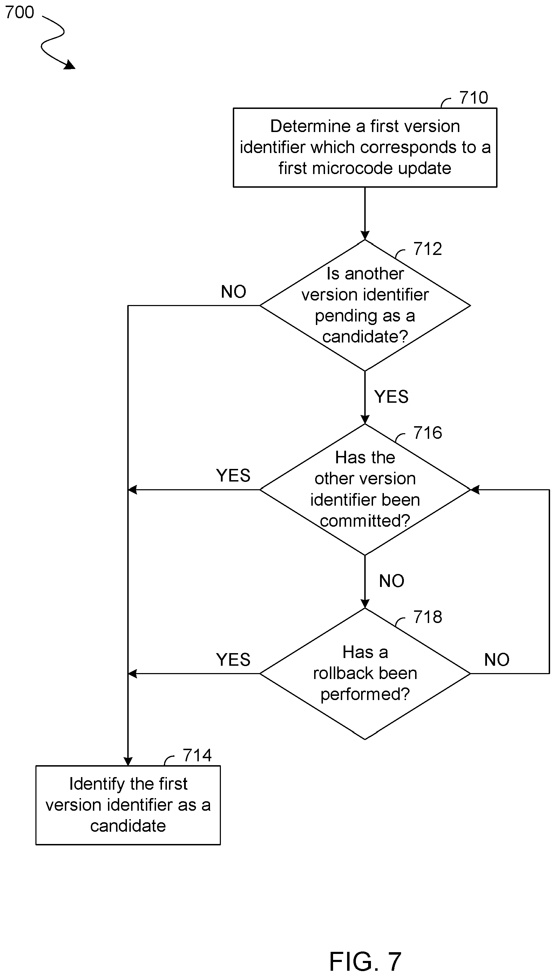

FIG. 7 shows a method 700 for selectively allowing or preventing the designation of a version identifier as a candidate to be subsequently committed according to an embodiment. Method 700 illustrates one example of an embodiment which conditionally defers a pendency of a candidate version identifier at least until the pendency of another candidate version identifier (if any) has ended - e.g., due to a version commit event or a microcode rollback event. Operations such as those of method 700 are performed with one or processors 120, 300, in some embodiments - e.g., wherein method 700 includes, is based on, or is a basis for, some or all operations of one of methods 200, 500, 600.

As shown in FIG. 7, method 700 comprises (at 710) determining a first version identifier which corresponds to a first microcode update. For example, the first version identifier is specified or otherwise indicated by header information and/or other metadata which is associated with (e.g., communicated with) the first microcode update.

Method 700 further comprises (at 712) performing an evaluation (at 712) to determine whether some other version identifier is pending as a candidate to be the subject of a deferred commit. By way of illustration and not limitation, the evaluating at 712 comprises performing a read operation to determine a current value of the parameter COMMIT_SVN of the IA32_MCU_SVN_COMMIT register 440 (or, for example, to determine a current value of the parameter PENDING_MCU_SVN of the IA32_MCU_SVN_INFO register 460). In another embodiment, the evaluating at 712 comprises processor 300 performing a read access of one or pendency state 333 or candidate IDv 335.

Where it is determined at 712 that no other version identifier is pending as a candidate, method 700 identifies the first version identifier (at 714) as being a candidate for a deferred commit. For example, the identifying at 714 comprises setting the parameter PENDING_MCU_SVN of the IA32_MCU_SVN_INFO register 460 (or, for example, the candidate IDv 335) to be equal to the first version identifier.

Where it is determined at 716 that the other version identifier has been committed, method 700 identifies the first version identifier (at 714) as being a candidate for a deferred commit. Where it is instead determined at 712 that the other version identifier is pending as a candidate, method 700 performs another evaluation (at 716) to detect whether the other version identifier has been committed. For example, the evaluating at 716 comprises accessing the committed IDv 334 - or, for example, the parameter MCU_SVN of the IA32_MCU_SVN_INFO register 460 - to determine whether it has been changed to be equal to the first version identifier.

Where it is instead determined at 716 that the other version identifier has still not been committed, method 700 performs another evaluation (at 718) to determine whether a rollback has been performed (wherein the rollback ends the pendency of the other version identifier as a candidate to be committed). Where it is determined at 718 that no such rollback has been performed, method 700 performs a next instance of the evaluating at 716. Where it is instead determined at 718 that a rollback has been performed, method 700 identifies the first version identifier (at 714) as being a candidate for a deferred commit.

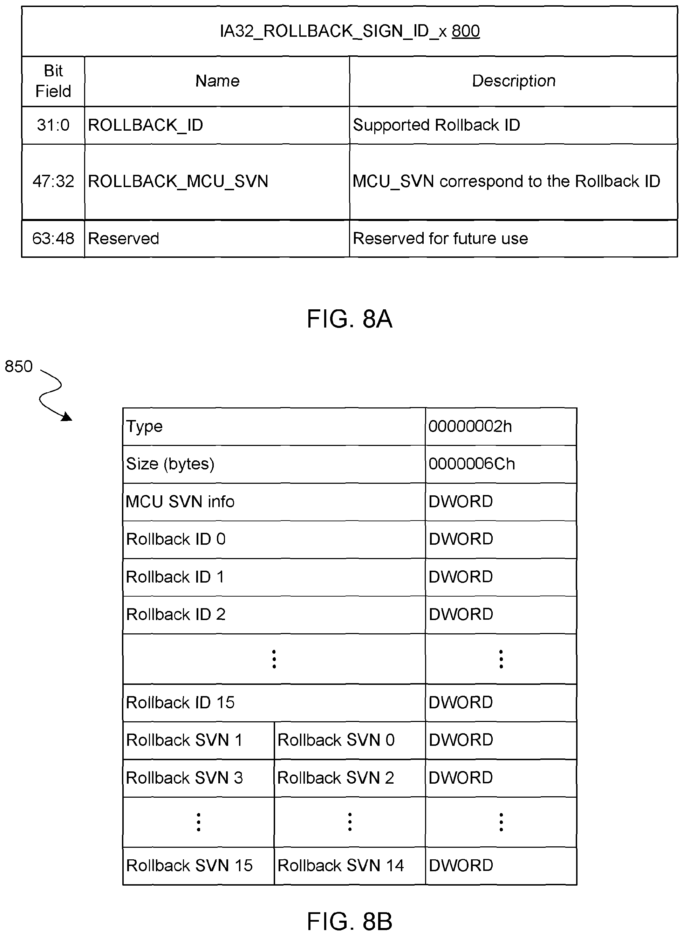

FIG. 8A shows an example format of a register 800 (e.g., a read and/or write capable model-specific register) which identifies a microcode update for which a processor supports a rollback. Register 800 illustrates an example embodiment which enables any of one or more microcode updates to be candidates for rolling back by a processor. In various embodiments, one of processors 120, 300 comprises register 800 - e.g., wherein the rollback 622 of method 600 includes or is otherwise based on an access of register 800.

As shown in FIG. 8A, an IA32_ROLLBACK_SIGN_ID_x register 800 comprises a parameter ROLLBACK_ID which is to receive and/or provide an identifier of a corresponding "rollback-available" microcode update - i.e., a microcode update to which the processor in question is currently able to be rolled back. For example, the ROLLBACK_ID parameter is to provide an identifier of a location where the corresponding rollback-available microcode update is stored. Alternatively or in addition, the ROLLBACK_ID parameter is to provide an identifier of a tag, hash or other suitable identifier which, for example, is based at least in part on the contents of the corresponding microcode update. However, it is to be noted that, in some embodiments, the ROLLBACK_ID parameter is to be distinct from (i.e., different than) a version identifier.

For example, in one such embodiment, register 800 further comprises a parameter ROLLBACK_MCU_SVN which is to receive and/or provide a version identifier - e.g., a secure version number, or "SVN" - which corresponds to the microcode update which is identified with the ROLLBACK_ID parameter. In various embodiments, register 800 is accessible to any of various suitable types of hardware, firmware and/or executing software which is privileged or otherwise configured to control the performance of a microcode rollback. In one such embodiment, a processor comprises multiple registers of the type illustrated by the IA32_ROLLBACK_SIGN_ID_x register 800 - e.g., wherein each such register is to identify a corresponding rollback-available microcode update.

In an illustrative scenario according to one embodiment, loading a microcode update includes, results in, or is otherwise associated with, an updating of register 800. For example, a given microcode update includes - or is otherwise communicated with - metadata which identifies one or more other microcode updates as being rollback-available after a loading of that given microcode update. In various embodiments, such metadata is provided in a header and/or other suitable portion of a microcode update. Based on such metadata, one or more registers including register 800 is each provided with information identifying a respective rollback-available microcode update.

FIG. 8B shows a format of metadata 850 which is provided with, or which otherwise describes, a microcode update according to an embodiment. Metadata 850 demonstrates one example of an embodiment wherein one or more other microcode updates are identified each as being rollback-available after a loading of the microcode update in question. Information such as that which is provided according to the format of metadata 850 is communicated (for example) with one of processors 120, 300 - e.g., wherein information in the metadata 850 is written to one or more registers each having features of the IA32_ROLLBACK_SIGN_ID_x register 800.

As shown in FIG. 8B, metadata 850 comprises a "MCU SVN info" field which is to provide a version identifier (such as a SVN) for the microcode update in question. Furthermore, metadata 850 further comprises one or more fields - such as the illustrative fields "Rollback ID 0" through "Rollback ID 15" shown - which, for example, are to each provide a respective microcode update identifier such as that to be written to the ROLLBACK_ID parameter in register 800. Further still, metadata 850 comprises one or more fields - such as the illustrative fields "Rollback SVN 0" through "Rollback SVN 15" shown - which, for example, are to each provide a respective microcode update identifier such as that to be written to the ROLLBACK_MCU_SVN parameter in register 800. In one such embodiment, the fields "Rollback ID 0" through "Rollback ID 15" correspond to the fields "Rollback SVN 0" through "Rollback SVN 15" (respectively).

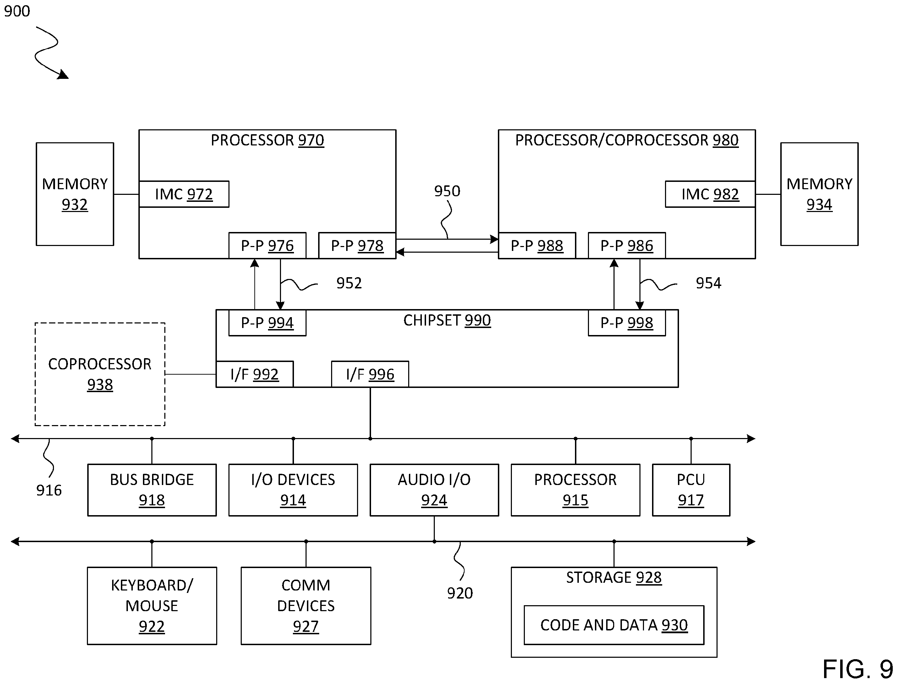

FIG. 9 illustrates an exemplary system. Multiprocessor system 900 is a point-to-point interconnect system and includes a plurality of processors including a first processor 970 and a second processor 980 coupled via a point-to-point interconnect 950. In some examples, the first processor 970 and the second processor 980 are homogeneous. In some examples, first processor 970 and the second processor 980 are heterogenous. Though the exemplary system 900 is shown to have two processors, the system may have three or more processors, or may be a single processor system.

Processors 970 and 980 are shown including integrated memory controller (IMC) circuitry 972 and 982, respectively. Processor 970 also includes as part of its interconnect controller point-to-point (P-P) interfaces 976 and 978; similarly, second processor 980 includes P-P interfaces 986 and 988. Processors 970, 980 may exchange information via the point-to-point (P-P) interconnect 950 using P-P interface circuits 978, 988. IMCs 972 and 982 couple the processors 970, 980 to respective memories, namely a memory 932 and a memory 934, which may be portions of main memory locally attached to the respective processors.

Processors 970, 980 may each exchange information with a chipset 990 via individual P-P interconnects 952, 954 using point to point interface circuits 976, 994, 986, 998. Chipset 990 may optionally exchange information with a coprocessor 938 via an interface 992. In some examples, the coprocessor 938 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 970, 980 or outside of both processors, yet connected with the processors via P-P interconnect, such that either or both processors' local cache information may be stored in the shared cache if a processor is placed into a low power mode.

Chipset 990 may be coupled to a first interconnect 916 via an interface 996. In some examples, first interconnect 916 may be a Peripheral Component Interconnect (PCI) interconnect, or an interconnect such as a PCI Express interconnect or another I/O interconnect. In some examples, one of the interconnects couples to a power control unit (PCU) 917, which may include circuitry, software, and/or firmware to perform power management operations with regard to the processors 970, 980 and/or co-processor 938. PCU 917 provides control information to a voltage regulator (not shown) to cause the voltage regulator to generate the appropriate regulated voltage. PCU 917 also provides control information to control the operating voltage generated. In various examples, PCU 917 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 917 is illustrated as being present as logic separate from the processor 970 and/or processor 980. In other cases, PCU 917 may execute on a given one or more of cores (not shown) of processor 970 or 980. In some cases, PCU 917 may be implemented as a microcontroller (dedicated or general-purpose) or other control logic configured to execute its own dedicated power management code, sometimes referred to as P-code. In yet other examples, power management operations to be performed by PCU 917 may be implemented externally to a processor, such as by way of a separate power management integrated circuit (PMIC) or another component external to the processor. In yet other examples, power management operations to be performed by PCU 917 may be implemented within BIOS or other system software.

Various I/O devices 914 may be coupled to first interconnect 916, along with a bus bridge 918 which couples first interconnect 916 to a second interconnect 920. In some examples, one or more additional processor(s) 915, such as coprocessors, high-throughput many integrated core (MIC) processors, GPGPUs, accelerators (such as graphics accelerators or digital signal processing (DSP) units), field programmable gate arrays (FPGAs), or any other processor, are coupled to first interconnect 916. In some examples, second interconnect 920 may be a low pin count (LPC) interconnect. Various devices may be coupled to second interconnect 920 including, for example, a keyboard and/or mouse 922, communication devices 927 and a storage circuitry 928. Storage circuitry 928 may be one or more non-transitory machine-readable storage media as described below, such as a disk drive or other mass storage device which may include instructions/code and data 930 in some examples. Further, an audio I/O 924 may be coupled to second interconnect 920. Note that other architectures than the point-to-point architecture described above are possible. For example, instead of the point-to-point architecture, a system such as multiprocessor system 900 may implement a multi-drop interconnect or other such architecture.

### Exemplarv Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may include on the same die as the described CPU (sometimes referred to as the application core(s) or application processor(s)), the above described coprocessor, and additional functionality. Exemplary core architectures are described next, followed by descriptions of exemplary processors and computer architectures.

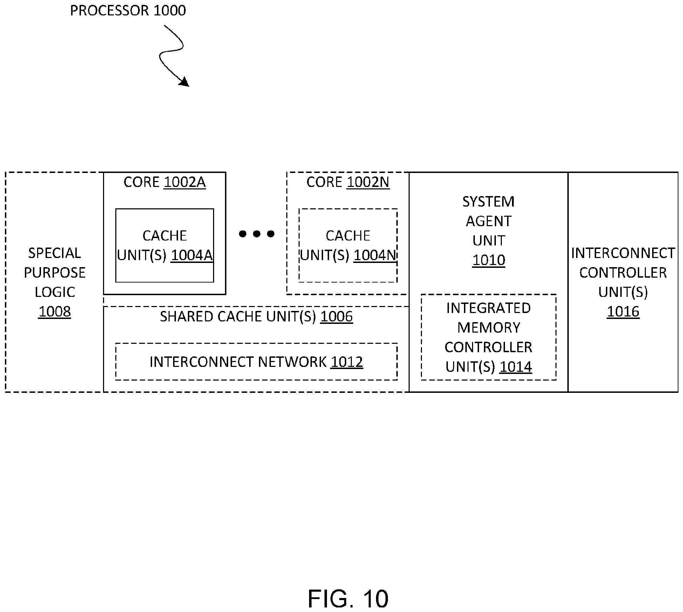

FIG. 10 illustrates a block diagram of an example processor 1000 that may have more than one core and an integrated memory controller. The solid lined boxes illustrate a processor 1000 with a single core 1002A, a system agent unit circuitry 1010, a set of one or more interconnect controller unit(s) circuitry 1016, while the optional addition of the dashed lined boxes illustrates an alternative processor 1000 with multiple cores 1002A-N, a set of one or more integrated memory controller unit(s) circuitry 1014 in the system agent unit circuitry 1010, and special purpose logic 1008, as well as a set of one or more interconnect controller units circuitry 1016. Note that the processor 1000 may be one of the processors 970 or 980, or co-processor 938 or 915 of FIG. 9.

Thus, different implementations of the processor 1000 may include: 1) a CPU with the special purpose logic 1008 being integrated graphics and/or scientific (throughput) logic (which may include one or more cores, not shown), and the cores 1002A-N being one or more general purpose cores (e.g., general purpose in-order cores, general purpose out-of-order cores, or a combination of the two); 2) a coprocessor with the cores 1002A-N being a large number of special purpose cores intended primarily for graphics and/or scientific (throughput); and 3) a coprocessor with the cores 1002A-N being a large number of general purpose in-order cores. Thus, the processor 1000 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 1000 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1004A-N within the cores 1002A-N, a set of one or more shared cache unit(s) circuitry 1006, and external memory (not shown) coupled to the set of integrated memory controller unit(s) circuitry 1014. The set of one or more shared cache unit(s) circuitry 1006 may include one or more mid-level caches, such as level 2 (L2), level 3 (L3), level 4 (L4), or other levels of cache, such as a last level cache (LLC), and/or combinations thereof. While in some examples ring-based interconnect network circuitry 1012 interconnects the special purpose logic 1008 (e.g., integrated graphics logic), the set of shared cache unit(s) circuitry 1006, and the system agent unit circuitry 1010, alternative examples use any number of well-known techniques for interconnecting such units. In some examples, coherency is maintained between one or more of the shared cache unit(s) circuitry 1006 and cores 1002A-N.

In some examples, one or more of the cores 1002A-N are capable of multi-threading. The system agent unit circuitry 1010 includes those components coordinating and operating cores 1002A-N. The system agent unit circuitry 1010 may include, for example, power control unit (PCU) circuitry and/or display unit circuitry (not shown). The PCU may be or may include logic and components needed for regulating the power state of the cores 1002A-N and/or the special purpose logic 1008 (e.g., integrated graphics logic). The display unit circuitry is for driving one or more externally connected displays.

The cores 1002A-N may be homogenous in terms of instruction set architecture (ISA). Alternatively, the cores 1002A-N may be heterogeneous in terms of ISA; that is, a subset of the cores 1002A-N may be capable of executing an ISA, while other cores may be capable of executing only a subset of that ISA or another ISA.

### Exemplary Core Architectures -In-order and out-of-order core block diagram.

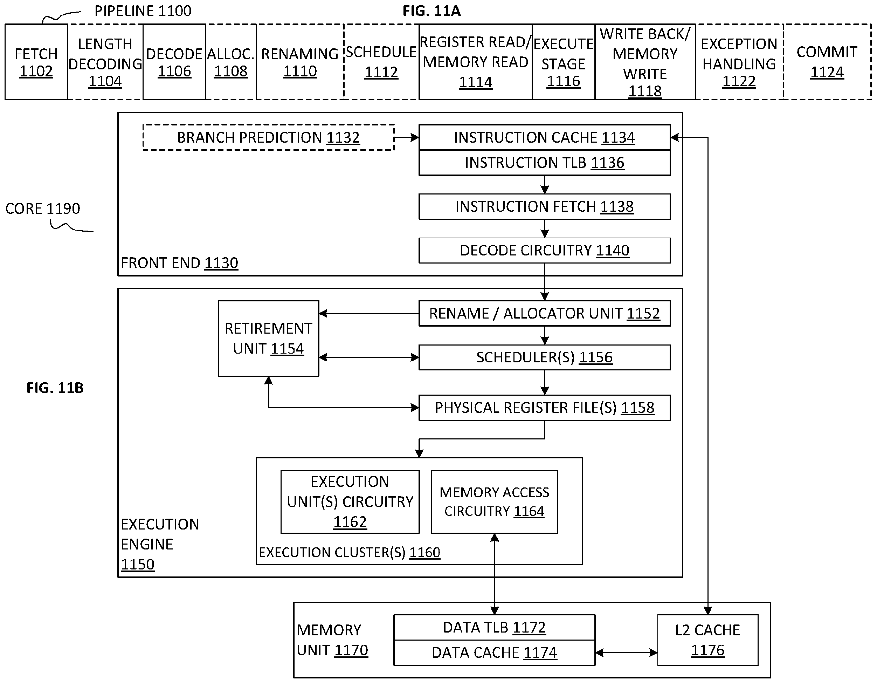

FIG. 11A is a block diagram illustrating both an exemplary in-order pipeline and an exemplary register renaming, out-of-order issue/execution pipeline according to examples. FIG. 11B is a block diagram illustrating both an exemplary example of an in-order architecture core and an exemplary register renaming, out-of-order issue/execution architecture core to be included in a processor according to examples. The solid lined boxes in FIGS. 11A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 11A, a processor pipeline 1100 includes a fetch stage 1102, an optional length decoding stage 1104, a decode stage 1106, an optional allocation (Alloc) stage 1108, an optional renaming stage 1110, a schedule (also known as a dispatch or issue) stage 1112, an optional register read/memory read stage 1114, an execute stage 1116, a write back/memory write stage 1118, an optional exception handling stage 1122, and an optional commit stage 1124. One or more operations can be performed in each of these processor pipeline stages. For example, during the fetch stage 1102, one or more instructions are fetched from instruction memory, and during the decode stage 1106, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1106 and the register read/memory read stage 1114 may be combined into one pipeline stage. In one example, during the execute stage 1116, the decoded instructions may be executed, LSU address/data pipelining to an Advanced Microcontroller Bus (AMB) interface may be performed, multiply and add operations may be performed, arithmetic operations with branch results may be performed, etc.

By way of example, the exemplary register renaming, out-of-order issue/execution architecture core of FIG. 11B may implement the pipeline 1100 as follows: 1) the instruction fetch circuitry 1138 performs the fetch and length decoding stages 1102 and 1104; 2) the decode circuitry 1140 performs the decode stage 1106; 3) the rename/allocator unit circuitry 1152 performs the allocation stage 1108 and renaming stage 1110; 4) the scheduler(s) circuitry 1156 performs the schedule stage 1112; 5) the physical register file(s) circuitry 1158 and the memory unit circuitry 1170 perform the register read/memory read stage 1114; the execution cluster(s) 1160 perform the execute stage 1116; 6) the memory unit circuitry 1170 and the physical register file(s) circuitry 1158 perform the write back/memory write stage 1118; 7) various circuitry may be involved in the exception handling stage 1122; and 8) the retirement unit circuitry 1154 and the physical register file(s) circuitry 1158 perform the commit stage 1124.

FIG. 11B shows a processor core 1190 including front-end unit circuitry 1130 coupled to an execution engine unit circuitry 1150, and both are coupled to a memory unit circuitry 1170. The core 1190 may be a reduced instruction set architecture computing (RISC) core, a complex instruction set architecture computing (CISC) core, a very long instruction word (VLIW) core, or a hybrid or alternative core type. As yet another option, the core 1190 may be a special-purpose core, such as, for example, a network or communication core, compression engine, coprocessor core, general purpose computing graphics processing unit (GPGPU) core, graphics core, or the like.

The front end unit circuitry 1130 may include branch prediction circuitry 1132 coupled to an instruction cache circuitry 1134, which is coupled to an instruction translation lookaside buffer (TLB) 1136, which is coupled to instruction fetch circuitry 1138, which is coupled to decode circuitry 1140. In one example, the instruction cache circuitry 1134 is included in the memory unit circuitry 1170 rather than the front-end circuitry 1130. The decode circuitry 1140 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1140 may further include an address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1140 may be implemented using various different mechanisms. Examples of suitable mechanisms include, but are not limited to, look-up tables, hardware implementations, programmable logic arrays (PLAs), microcode read only memories (ROMs), etc. In one example, the core 1190 includes a microcode ROM (not shown) or other medium that stores microcode for certain macroinstructions (e.g., in decode circuitry 1140 or otherwise within the front end circuitry 1130). In one example, the decode circuitry 1140 includes a micro-operation (micro-op) or operation cache (not shown) to hold/cache decoded operations, micro-tags, or micro-operations generated during the decode or other stages of the processor pipeline 1100. The decode circuitry 1140 may be coupled to rename/allocator unit circuitry 1152 in the execution engine circuitry 1150.

The execution engine circuitry 1150 includes the rename/allocator unit circuitry 1152 coupled to a retirement unit circuitry 1154 and a set of one or more scheduler(s) circuitry 1156. The scheduler(s) circuitry 1156 represents any number of different schedulers, including reservations stations, central instruction window, etc. In some examples, the scheduler(s) circuitry 1156 can include arithmetic logic unit (ALU) scheduler/scheduling circuitry, ALU queues, arithmetic generation unit (AGU) scheduler/scheduling circuitry, AGU queues, etc. The scheduler(s) circuitry 1156 is coupled to the physical register file(s) circuitry 1158. Each of the physical register file(s) circuitry 1158 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1158 includes vector registers unit circuitry, writemask registers unit circuitry, and scalar register unit circuitry. These register units may provide architectural vector registers, vector mask registers, general-purpose registers, etc. The physical register file(s) circuitry 1158 is coupled to the retirement unit circuitry 1154 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1154 and the physical register file(s) circuitry 1158 are coupled to the execution cluster(s) 1160. The execution cluster(s) 1160 includes a set of one or more execution unit(s) circuitry 1162 and a set of one or more memory access circuitry 1164. The execution unit(s) circuitry 1162 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1156, physical register file(s) circuitry 1158, and execution cluster(s) 1160 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1164). It should also be understood that where separate pipelines are used, one or more of these pipelines may be out-of-order issue/execution and the rest in-order.

In some examples, the execution engine unit circuitry 1150 may perform load store unit (LSU) address/data pipelining to an Advanced Microcontroller Bus (AMB) interface (not shown), and address phase and writeback, data phase load, store, and branches.

The set of memory access circuitry 1164 is coupled to the memory unit circuitry 1170, which includes data TLB circuitry 1172 coupled to a data cache circuitry 1174 coupled to a level 2 (L2) cache circuitry 1176. In one exemplary example, the memory access circuitry 1164 may include a load unit circuitry, a store address unit circuit, and a store data unit circuitry, each of which is coupled to the data TLB circuitry 1172 in the memory unit circuitry 1170. The instruction cache circuitry 1134 is further coupled to the level 2 (L2) cache circuitry 1176 in the memory unit circuitry 1170. In one example, the instruction cache 1134 and the data cache 1174 are combined into a single instruction and data cache (not shown) in L2 cache circuitry 1176, a level 3 (L3) cache circuitry (not shown), and/or main memory. The L2 cache circuitry 1176 is coupled to one or more other levels of cache and eventually to a main memory.

The core 1190 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1190 includes logic to support a packed data instruction set architecture extension (e.g., AVX1, AVX2), thereby allowing the operations used by many multimedia applications to be performed using packed data.

### Exemplary Execution Unit(s) Circuitry.

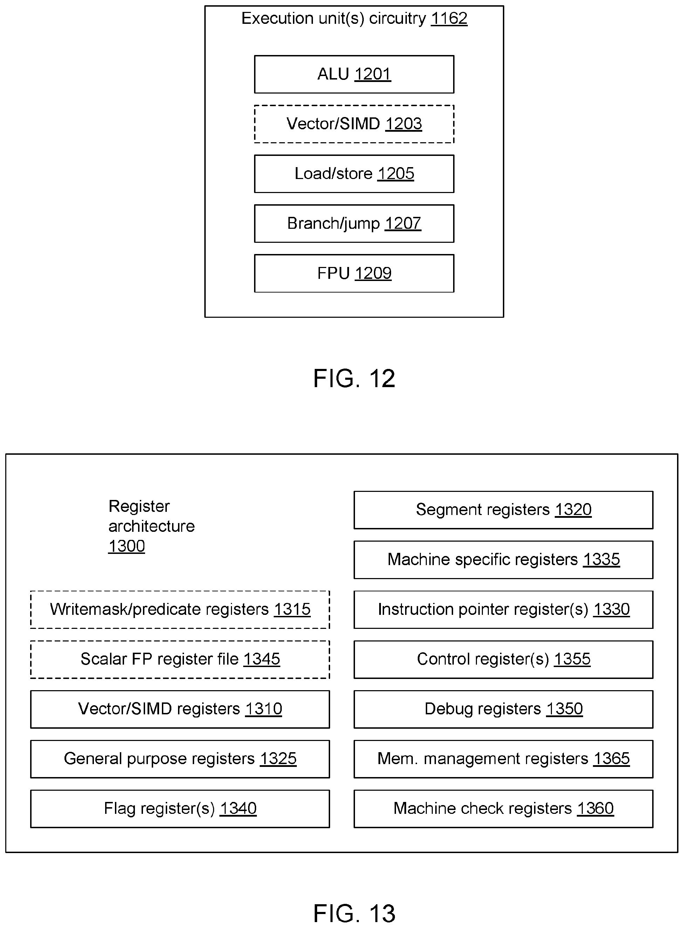

FIG. 12 illustrates examples of execution unit(s) circuitry, such as execution unit(s) circuitry 1162 of FIG. 11B. As illustrated, execution unit(s) circuity 1162 may include one or more ALU circuits 1201, optional vector/single instruction multiple data (SIMD) circuits 1203, load/store circuits 1205, branch/jump circuits 1207, and/or Floating-point unit (FPU) circuits 1209. ALU circuits 1201 perform integer arithmetic and/or Boolean operations. Vector/SIMD circuits 1203 perform vector/SIMD operations on packed data (such as SIMD/vector registers). Load/store circuits 1205 execute load and store instructions to load data from memory into registers or store from registers to memory. Load/store circuits 1205 may also generate addresses. Branch/jump circuits 1207 cause a branch or jump to a memory address depending on the instruction. FPU circuits 1209 perform floating-point arithmetic. The width of the execution unit(s) circuitry 1162 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Exemplary Register Architecture

FIG. 13 is a block diagram of a register architecture 1300 according to some examples. As illustrated, the register architecture 1300 includes vector/SIMD registers 1310 that vary from 128-bit to 1,024 bits width. In some examples, the vector/SIMD registers 1310 are physically 512-bits and, depending upon the mapping, only some of the lower bits are used. For example, in some examples, the vector/SIMD registers 1310 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1300 includes writemask/predicate registers 1315. For example, in some examples, there are 8 writemask/predicate registers (sometimes called k0 through k7) that are each 16-bit, 32-bit, 64-bit, or 128-bit in size. Writemask/predicate registers 1315 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1315 corresponds to a data element position of the destination. In other examples, the writemask/predicate registers 1315 are scalable and consists of a set number of enable bits for a given vector element (e.g., 8 enable bits per 64-bit vector element).

The register architecture 1300 includes a plurality of general-purpose registers 1325. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1300 includes scalar floating-point (FP) register 1345 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1340 (e.g., EFLAGS, RFLAGS, etc.) store status and control information for arithmetic, compare, and system operations. For example, the one or more flag registers 1340 may store condition code information such as carry, parity, auxiliary carry, zero, sign, and overflow. In some examples, the one or more flag registers 1340 are called program status and control registers.

Segment registers 1320 contain segment points for use in accessing memory. In some examples, these registers are referenced by the names CS, DS, SS, ES, FS, and GS.

Machine specific registers (MSRs) 1335 control and report on processor performance. Most MSRs 1335 handle system-related functions and are not accessible to an application program. Machine check registers 1360 consist of control, status, and error reporting MSRs that are used to detect and report on hardware errors.

One or more instruction pointer register(s) 1330 store an instruction pointer value. Control register(s) 1355 (e.g., CR0-CR4) determine the operating mode of a processor (e.g., processor 970, 980, 938, 915, and/or 1000) and the characteristics of a currently executing task. Debug registers 1350 control and allow for the monitoring of a processor or core's debugging operations.

Memory (mem) management registers 1365 specify the locations of data structures used in protected mode memory management. These registers may include a GDTR, IDRT, task register, and a LDTR register.

Alternative examples may use wider or narrower registers. Additionally, alternative examples may use more, less, or different register files and registers. The register architecture 1300 may, for example, be used in physical register file(s) circuitry 1158.

The description herein includes numerous details to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Techniques and architectures for operating a processor are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

In one or more first embodiments, a processor comprises first circuitry to receive a first microcode update, and to load the first microcode update to a repository of the processor, second circuitry to identify a first version identifier as a candidate to be committed, wherein the first version identifier corresponds to the first microcode update, third circuitry to receive an indication of an approval of the first microcode update, wherein the third circuitry is to receive the indication after the first microcode update has been loaded to the repository, after the first version identifier has been identified as the candidate, and while a second identifier is a committed version identifier at the processor, wherein the second version identifier corresponds to a second microcode update, and fourth circuitry to perform a commit of the first version identifier based on the indication.

In one or more second embodiments, further to the first embodiment, one or more registers of the processor comprise a candidate version identifier parameter, and a committed version identifier parameter, the second circuitry to identify the first version identifier as the candidate comprises the second circuitry, as part of an execution of a first instruction of a software process, to set the candidate version identifier parameter to be equal to the first version identifier, and the fourth circuitry to perform the commit of the first version identifier comprises the fourth circuitry, as part of an execution of a second instruction of the software process, to set the committed version identifier parameter to be equal to the first version identifier.

In one or more third embodiments, further to the second embodiment, the processor further comprises fifth circuitry which, based on the indication, is to set a value of the candidate version identifier parameter to indicate an absence of any version identifier which is pending as a candidate to be committed.

In one or more fourth embodiments, further to the first embodiment or the second embodiment, between a shutdown of the processor and a next restart of the processor after the shutdown, the processor is to execute second instructions with the second microcode update, perform a load of the first microcode update, execute first instructions with the first microcode update, and perform a commit of the first version identifier.

In one or more fifth embodiments, further to the first embodiment or the second embodiment, the processor further comprises sixth circuitry to execute one or more operations with the first microcode update, wherein an evaluation of the first microcode update is to be performed based on the one or more operations, and the indication is to be received based on the evaluation.

In one or more sixth embodiments, further to the first embodiment or the second embodiment, the first circuitry is further to receive a third microcode update, the second circuitry is further to determine a third version identifier which corresponds to the third microcode update, and the fourth circuitry is to access an enablement parameter to determine whether a deferred commit functionality of the processor is enabled, wherein, based on a value of the enablement parameter, the fourth circuitry is to select between a deferral of a commit of the third version identifier at least until after an indication of an approval of the third microcode update after a load of the third microcode update, and an automatic performance of the commit of the third version identifier with the load of the third microcode update.

In one or more seventh embodiments, further to the sixth embodiment, the processor further comprises fifth circuitry to set the value of the enablement parameter.

In one or more eighth embodiments, further to the first embodiment or the second embodiment, the second circuitry is further to detect a pendency of a third version identifier as the candidate to be committed, wherein the third version identifier corresponds to a third microcode update, based on the pendency, monitor for an event which comprises one of a rollback of the third microcode update, or a commit of the third version identifier, and based on the event, identify a fourth version identifier as the candidate to be committed.

In one or more ninth embodiments, further to the first embodiment or the second embodiment, the processor further comprises fifth circuitry to receive metadata which corresponds to the first microcode update, and identify, based on the metadata, one or more other microcode updates to which the processor is able to be rolled back after the first microcode update is loaded.

In one or more tenth embodiments, one or more non-transitory computer-readable storage media have stored thereon instructions which, when executed by one or more processing units, cause the one or more processing units to perform a method comprising receiving a first microcode update, loading the first microcode update to a repository of a processor, identifying a first version identifier as a candidate to be committed, wherein the first version identifier corresponds to the first microcode update, receiving an indication of an approval of the first microcode update, the receiving after the first microcode update has been loaded to the repository, after the first version identifier has been identified as the candidate, and while a second identifier is a committed version identifier at the processor, wherein the second version identifier corresponds to a second microcode update, and based on the indication, performing a commit of the first version identifier.

In one or more eleventh embodiments, further to the tenth embodiment, one or more registers of the processor comprise a candidate version identifier parameter, and a committed version identifier parameter, identifying the first version identifier as the candidate comprises executing a first instruction of a software process to set the candidate version identifier parameter to be equal to the first version identifier, and performing the commit of the first version identifier comprises executing a second instruction of the software process to set the committed version identifier parameter to be equal to the first version identifier.

In one or more twelfth embodiments, further to the eleventh embodiment, the method further comprises based on the indication, setting a value of the candidate version identifier parameter to indicate an absence of any version identifier which is pending as a candidate to be committed.

In one or more thirteenth embodiments, further to the tenth embodiment or the eleventh embodiment, between a shutdown of the processor and a next restart of the processor after the shutdown, the processor executes second instructions with the second microcode update, performs a load of the first microcode update, executes first instructions with the first microcode update, and performs a commit of the first version identifier.

In one or more fourteenth embodiments, further to the tenth embodiment or the eleventh embodiment, the method further comprises executing one or more operations with the first microcode update, and performing an evaluation of the first microcode update based on the one or more operations, wherein the indication is received based on the evaluation.

In one or more fifteenth embodiments, further to the tenth embodiment or the eleventh embodiment, the method further comprises receiving a third microcode update, determining a third version identifier which corresponds to the third microcode update, accessing an enablement parameter to determine whether a deferred commit functionality of the processor is enabled, and based on a value of the enablement parameter, selecting between deferring a commit of the third version identifier at least until after an indication of an approval of the third microcode update after a load of the third microcode update, and automatically performing the commit of the third version identifier with the load of the third microcode update.

In one or more sixteenth embodiments, further to the fifteenth embodiment, the method further comprises setting the value of the enablement parameter.

In one or more seventeenth embodiments, further to the tenth embodiment or the eleventh embodiment, detecting a pendency of a third version identifier as the candidate to be committed, wherein the third version identifier corresponds to a third microcode update, based on the pendency, performing monitoring to detect an event comprising one of a rollback of the third microcode update, or a commit of the third version identifier, and based on the event, identifying a fourth version identifier as the candidate to be committed.

In one or more eighteenth embodiments, further to the tenth embodiment or the eleventh embodiment, the method further comprises receiving metadata which corresponds to the first microcode update, and identifying, based on the metadata, one or more other microcode updates to which the processor is able to be rolled back after the first microcode update is loaded.

In one or more nineteenth embodiments, a method comprises receiving a first microcode update, loading the first microcode update to a repository of a processor, identifying a first version identifier as a candidate to be committed, wherein the first version identifier corresponds to the first microcode update, receiving an indication of an approval of the first microcode update, the receiving after the first microcode update has been loaded to the repository, after the first version identifier has been identified as the candidate, and while a second identifier is a committed version identifier at the processor, wherein the second version identifier corresponds to a second microcode update, and based on the indication, performing a commit of the first version identifier.

In one or more twentieth embodiments, further to the nineteenth embodiment, one or more registers of the processor comprise a candidate version identifier parameter, and a committed version identifier parameter, identifying the first version identifier as the candidate comprises executing a first instruction of a software process to set the candidate version identifier parameter to be equal to the first version identifier, and performing the commit of the first version identifier comprises executing a second instruction of the software process to set the committed version identifier parameter to be equal to the first version identifier.

In one or more twenty-first embodiments, further to the twentieth embodiment, the method further comprises based on the indication, setting a value of the candidate version identifier parameter to indicate an absence of any version identifier which is pending as a candidate to be committed.

In one or more twenty-second embodiments, further to the nineteenth embodiment or the twentieth embodiment, between a shutdown of the processor and a next restart of the processor after the shutdown, the processor executes second instructions with the second microcode update, performs a load of the first microcode update, executes first instructions with the first microcode update, and performs a commit of the first version identifier.

In one or more twenty-third embodiments, further to the nineteenth embodiment or the twentieth embodiment, the method further comprises executing one or more operations with the first microcode update, and performing an evaluation of the first microcode update based on the one or more operations, wherein the indication is received based on the evaluation.

In one or more twenty-fourth embodiments, further to the nineteenth embodiment or the twentieth embodiment, the method further comprises receiving a third microcode update, determining a third version identifier which corresponds to the third microcode update, accessing an enablement parameter to determine whether a deferred commit functionality of the processor is enabled, and based on a value of the enablement parameter, selecting between deferring a commit of the third version identifier at least until after an indication of an approval of the third microcode update after a load of the third microcode update, and automatically performing the commit of the third version identifier with the load of the third microcode update.

In one or more twenty-fifth embodiments, further to the twenty-fourth embodiment, the method further comprises setting the value of the enablement parameter.

In one or more twenty-sixth embodiments, further to the nineteenth embodiment or the twentieth embodiment, detecting a pendency of a third version identifier as the candidate to be committed, wherein the third version identifier corresponds to a third microcode update, based on the pendency, performing monitoring to detect an event comprising one of a rollback of the third microcode update, or a commit of the third version identifier, and based on the event, identifying a fourth version identifier as the candidate to be committed.

In one or more twenty-seventh embodiments, further to the nineteenth embodiment or the twentieth embodiment, the method further comprises receiving metadata which corresponds to the first microcode update, and identifying, based on the metadata, one or more other microcode updates to which the processor is able to be rolled back after the first microcode update is loaded.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A processor comprising:
first circuitry to receive a first microcode update, and to load the first microcode update to a repository of the processor;
second circuitry to identify a first version identifier as a candidate to be committed, wherein the first version identifier corresponds to the first microcode update;
third circuitry to receive an indication of an approval of the first microcode update, wherein the third circuitry is to receive the indication after the first microcode update has been loaded to the repository, after the first version identifier has been identified as the candidate, and while a second identifier is a committed version identifier at the processor, wherein the second version identifier corresponds to a second microcode update; and
fourth circuitry to perform a commit of the first version identifier based on the indication.

2. The processor of claim 1, wherein:
one or more registers of the processor comprise:
a candidate version identifier parameter; and
a committed version identifier parameter;
the second circuitry to identify the first version identifier as the candidate comprises the second circuitry, as part of an execution of a first instruction of a software process, to set the candidate version identifier parameter to be equal to the first version identifier; and
the fourth circuitry to perform the commit of the first version identifier comprises the fourth circuitry, as part of an execution of a second instruction of the software process, to set the committed version identifier parameter to be equal to the first version identifier.

3. The processor of claim 2, further comprising:
fifth circuitry which, based on the indication, is to set a value of the candidate version identifier parameter to indicate an absence of any version identifier which is pending as a candidate to be committed.

4. The processor of claim 1, wherein, between a shutdown of the processor and a next restart of the processor after the shutdown, the processor is to:
execute second instructions with the second microcode update;
perform a load of the first microcode update;
execute first instructions with the first microcode update; and
perform a commit of the first version identifier.

5. The processor of claim 1, further comprising sixth circuitry to execute one or more operations with the first microcode update, wherein:
an evaluation of the first microcode update is to be performed based on the one or more operations; and
the indication is to be received based on the evaluation.

6. The processor of claim 1, wherein:
the first circuitry is further to receive a third microcode update;
the second circuitry is further to determine a third version identifier which corresponds to the third microcode update; and
the fourth circuitry is to access an enablement parameter to determine whether a deferred commit functionality of the processor is enabled, wherein, based on a value of the enablement parameter, the fourth circuitry is to select between:
a deferral of a commit of the third version identifier at least until after an indication of an approval of the third microcode update after a load of the third microcode update; and
an automatic performance of the commit of the third version identifier with the load of the third microcode update.

7. The processor of claim 6, further comprising:
fifth circuitry to set the value of the enablement parameter.

8. The processor of claim 1, wherein the second circuitry is further to:
detect a pendency of a third version identifier as the candidate to be committed, wherein the third version identifier corresponds to a third microcode update;
based on the pendency, monitor for an event which comprises one of:
a rollback of the third microcode update; or
a commit of the third version identifier; and
based on the event, identify a fourth version identifier as the candidate to be committed.

9. The processor of claim 1, further comprising fifth circuitry to:
receive metadata which corresponds to the first microcode update; and
identify, based on the metadata, one or more other microcode updates to which the processor is able to be rolled back after the first microcode update is loaded.

10. A method comprising:
receiving a first microcode update;
loading the first microcode update to a repository of a processor;
identifying a first version identifier as a candidate to be committed, wherein the first version identifier corresponds to the first microcode update;
receiving an indication of an approval of the first microcode update, the receiving after the first microcode update has been loaded to the repository, after the first version identifier has been identified as the candidate, and while a second identifier is a committed version identifier at the processor, wherein the second version identifier corresponds to a second microcode update; and
based on the indication, performing a commit of the first version identifier.

11. The method of claim 10, wherein:
one or more registers of the processor comprise:
a candidate version identifier parameter; and
a committed version identifier parameter;
identifying the first version identifier as the candidate comprises executing a first instruction of a software process to set the candidate version identifier parameter to be equal to the first version identifier; and
performing the commit of the first version identifier comprises executing a second instruction of the software process to set the committed version identifier parameter to be equal to the first version identifier.

12. The method of claim 11, further comprising:
based on the indication, setting a value of the candidate version identifier parameter to indicate an absence of any version identifier which is pending as a candidate to be committed.

13. The method of claim 10, wherein, between a shutdown of the processor and a next restart of the processor after the shutdown, the processor:
executes second instructions with the second microcode update;
performs a load of the first microcode update;
executes first instructions with the first microcode update; and
performs a commit of the first version identifier.

14. The method of claim 10, wherein:
detecting a pendency of a third version identifier as the candidate to be committed, wherein the third version identifier corresponds to a third microcode update;
based on the pendency, performing monitoring to detect an event comprising one of:
a rollback of the third microcode update; or
a commit of the third version identifier; and
based on the event, identifying a fourth version identifier as the candidate to be committed.

15. Machine-readable storage including machine-readable instructions, when executed, to realize a processor or implement a method as claimed in any preceding claim.
